Europäisches Patentamt

European Patent Office

Office européen des brevets

(11) Veröffentlichungsnummer: **0 509 477 A1**

## (12) EUROPÄISCHE PATENTANMELDUNG

(21) Anmeldenummer: **92106520.7**

(22) Anmeldetag: **15.04.92**

(30) Priorität: **16.04.91 DE 9104598 U**

(43) Veröffentlichungstag der Anmeldung:
**21.10.92 Patentblatt 92/43**

(84) Benannte Vertragsstaaten:
**BE DE FR IT NL**

(51) Int. Cl.⁵: **A22C 11/00**

(71) Anmelder: **Natec Reich, Summer GmbH & Co. KG**
**Mannsnetterstrasse 1**
**W-8996 Opfenbach(DE)**

(72) Erfinder: **Mauderer, Dieter**
**Steinbühlweg 6**
**W-8961 Wiggensbach(DE)**
Erfinder: **Funke, Peter**
**Staufener Strasse 6**
**W-8998 Lindenberg(DE)**

(74) Vertreter: **Ernicke, Hans-Dieter, Dipl.-Ing. et al**
**Patentanwälte Dipl.-Ing. H.-D. Ernicke**
**Dipl.-Ing. Klaus Ernicke Schwibbogenplatz 2b**
**W-8900 Augsburg(DE)**

(54) **Verfahren und Vorrichtung zum maschinellen Ablösen der Haut von block- oder stangenförmigen Lebensmitteln.**

㊗ Die Erfindung betrifft ein Verfahren und eine Vorrichtung zum maschinellen Ablösen der Haut (3) von block- oder stangenförmigen Lebensmitteln (2), insbesondere Würsten. In einer Schälmaschine (1) wird hierzu die Haut (3) aufgetrennt, im Bereich der Trennlinie, vorzugsweise beidseits, von einer Haltevorrichtung (4) festgehalten und dann durch eine mechanische Zugbewegung vom Lebensmittel (2) abgelöst. Die Haltevorrichtung (4) hat zwei synchron angetriebene und die Wurst (2) umfassende Greifarme (6) mit steuerbaren Saugleisten (9), die die Haut (3) festhalten und dann in einer Schwenkbewegung von der ruhenden Wurst (2) abziehen. Die Auflage (10) für die Wurst (2) ist als beweglicher Auswerfer ausgebildet und mit einer Ansaugvorrichtung (12) versehen, mittels der die Haut (3) beim Abwerfen der Wurst (2) festgehalten wird.

Fig 3

EP 0 509 477 A1

Für die industrielle Herstellung abgepackter Wurstwaren werden große, von einer Fleischfabrik angelieferte Würste verwendet. Die stangenförmigen Würste werden in der Praxis von Hand geschält, anschließend portioniert und verpackt. Das Schälen von Hand ist sehr arbeits- und kraftaufwendig, da die Würste einen Durchmesser von bis zu 250 mm und Längen bis zu 1.400 mm besitzen können. Bei der Handschälung bleiben auch häufig noch Hautreste an der Wurst haften.

Aus der DE-C-2 759 892 ist eine Schälmaschine für kleine Würstchen in Strangform bekannt. Die Trennung von Würstchen und Haut erfolgt in einem mehrstufigen Vorgang, wobei der Würstchenstrang nacheinander mehrere Stationen durchläuft. Die Würstchen werden zunächst aus einem Sammelbehälter kommend durch ein Dampfrohr gezogen, dort erhitzt und danach unter einem Messer durchgeführt, das die Wursthaut in Längsrichtung aufschlitzt. Auf dem Weitertransport werden die Würstchen mittels einer nachgeordneten Blaseinrichtung mit Druckluft enthäutet. Die abgelöste Haut soll in der letzten Station auf einem um die Querachse rotierenden Unterdruckrad festgehalten und in einen Abfallbehälter befördert werden, während das nackte Würstchen tangential abgeführt wird. Diese Technik läßt sich nur mit relativ kleinen Würstchen im Strang durchführen und setzt zum Enthäuten eine Wärmebehandlung voraus. Die Enthäutung findet in der Druckluftstation statt, wobei die aufgeschlitzte Haut durch die Druckluft einerseits abgekühlt wird, was den Ablösevorgang unterstützt und andererseits mit der Druckluft abgeblasen wird. Am Unterdruckrad wird nur noch die abgelöste Haut vom Würstchen weggenommen und in eine andere Richtung befördert.

Es ist Aufgabe der vorliegenden Erfindung, eine Möglichkeit zum Ablösen der Haut von Lebensmitteln, insbesondere Würsten, aufzuzeigen, die qualitativ besser, wirtschaftlicher und für Lebensmittel beliebiger Art und Größe geeignet ist.

Die Erfindung löst diese Aufgabe mit den Merkmalen im Verfahrens- und Vorrichtungshauptanspruch.

Mit der Erfindung werden ein Schälverfahren und eine Schälvorrichtung vorgeschlagen, die für beliebige Arten und Größen von von block- oder stangenförmigen Lebensmitteln, z.B. auch Käse, geeignet sind. Das bevorzugte Einsatzgebiet ist das Ablösen der Haut von Würsten. Gleichfalls ist es möglich, Verpackungen von Lebensmittel abzulösen, zum Beispiel Folienverpackungen von Schinken oder dergleichen. Das erfindungsgemäße Schälverfahren und die Schälvorrichtung machen auch für große Stangenwürste oder dgl. Lebensmittel die Handarbeit überflüssig und ermöglichen ein schnelleres, zuverlässigeres und kostengünstigeres Enthäuten.

Die nachfolgenden Erläuterungen beziehen sich der Einfachheit halber auf eine Wurstschälung, sie gelten aber auch für das Ablösen der Haut jedes anderen geeigneten Lebensmittels.

Die Haut wird zunächst mit einer geeigneten Trennvorrichtung aufgeschnitten oder auf andere Weise mit einer Trennlinie oder einem Trennschlitz versehen. Nach der bevorzugten Ausführungsform geschieht dies in Form eines Längsschnittes. Es existieren aber auch andere Möglichkeiten, zum Beispiel ein Spiralschnitt, mehrere Ringschnitte, ein Fräsvorgang, ein Abschmelzen oder dergleichen.

Mit einer Haltevorrichtung wird die Haut im Bereich der Trennlinie ergriffen und in einer aktiven mechanischen Zugbewegung von der Wurst abgelöst. Damit ist ein sicheres Enthäuten beliebig großer Würste möglich. Eine besondere Vorbereitung, insbesondere eine vorherige Wärmebehandlung, ist nicht erforderlich.

Die Haltevorrichtung kann unterschiedlich ausgebildet sein, z.B. als mechanische Greifvorrichtung. Um einen sicheren Halt zu gewährleisten und der Rißgefahr beim Ablösen der Haut vorzubeugen, empfiehlt sich eine Saugvorrichtung zum Festhalten der Haut. Sie hat den Vorteil, daß die Haltekräfte gleichmäßig und über eine größere Länge beziehungsweise Fläche verteilt einwirken können. Es gibt so keinen punktförmigen Angriff, der zu Rißproblemen führen könnte. Die Haut wird zuverlässig erfaßt und dabei an den benachbarten Flächen ergriffen. Eine Saugvorrichtung hat den weiteren Vorteil, daß sie keiner exakten Positionierung bezüglich der Randkanten bedarf.

Die Haut wird vorzugsweise beidseits der Trennlinie erfaßt und nach beiden Seiten abgezogen. Die Relativbewegung zwischen Haut und Wurst kann aber auch auf andere Weise bewerkstelligt werden, indem die Haut nur auf einer Seite der Trennlinie festgehalten und dann mit einer Rollbewegung abgezogen wird. Dabei kann die Wurst gegenüber der ortsfest gehaltenen Haut abgerollt oder in kinematischer Umkehr die Haut in einer kreisenden Bewegung von der ruhenden Wurst abgelöst werden.

Die Relativbewegung zwischen der Haltevorrichtung mit der Haut und dem Lebensmittel wird durch einen geeigneten Antrieb erzeugt. Dies kann auf verschiedene Weise geschehen, was auch davon abhängig ist, wie die Trennlinie in der Haut aussieht. In der bevorzugten Ausführungsform wird ein Längsschnitt gesetzt und die Haut durch eine quer oder schräg zur Trennlinie gerichtete Bewegung der Haltevorrichtung gegenüber der ruhenden Wurst abgelöst. Wie vorstehend erwähnt, ist es auch möglich, die Haut an der Trennlinie festzuhalten und dann die Wurst quer oder schräg zu bewegen, insbesondere zu rollen. Man kann dabei mit einem entsprechenden Schnitt auch die Haut spiralförmig abwickeln.

Die bevorzugte Ausführungsform mit der bewegten Haltevorrichtung hat den Vorteil einer einfacheren Kinematik und einer platzsparenden Bauweise. Nach der Ablösebewegung haftet die nackte Wurst nur noch in einem schmalen Linienbereich an der Aufliegestelle auf der Haut. Um eine völlige Ablösung zu erreichen, genügt ein leichter Stoß, eine Schrägstellung oder ein anderer auf den nackten Wurstkörper einwirkender Bewegungseinfluß. In der bevorzugten Ausführungsform in Verbindung mit einer stangenförmigen beziehungsweise zylindrischen Wurst rollt sie durch Eigengewicht eine schräge Ebene hinab. Bei prismatischen Lebensmittel-Körpern kann auch eine Abzugsvorrichtung vorhanden sein.

Die Haltevorrichtung besteht vorzugsweise aus zwei gebogenen Greifarmen, die symmetrisch angeordnet und synchron angetrieben werden. Sie umgreifen die Wurst und lösen die Haut in einer beidseitigen Schwenkbewegung ab. In den Unteransprüchen sind diesbezügliche vorteilhafte Ausgestaltungen der Haltevorrichtung angegeben.

Die Wurst kann in der Schälmaschine auf unterschiedliche Weise eingebracht und für den Schälvorgang gelagert werden. In Verbindung mit der Greifarmkonstruktion empfiehlt sich eine selbstzentrierende Auflage in Form eines Prismas, das vorzugsweise auch eine Ansaugvorrichtung beinhaltet. Alternativ kann auch eine Zangenkonstruktion oder ein anderes geeignetes Stützelement eingesetzt werden. Die schwenkbaren Greifarme haben in Verbindung mit der zentrierenden Auflage den Vorteil, daß sie für den anfänglichen Längsschnitt der Haut zugleich als Spannmittel fungieren und die Wurst festhalten.

Um die Wurst vollends aus der abgeklappten Haut lösen zu können, ist die Auflage vorzugsweise als beweglicher, insbesondere schwenkbarer Auswerfer konzipiert. Beim Ablösevorgang wird die Haut durch die Ansaugvorrichtung festgehalten, während die Wurst abrollt. Durch Umsteuerung auf Blasdruck kann die Ansaugvorrichtung anschließend die Wursthaut entfernen und abwerfen.

Zur Verbesserung der Betriebsweise ist eine Kappvorrichtung an einer oder beiden Stirnseiten der Auflage vorgesehen, mit der eine oder beide Enden der Wurst entfernt werden. Hierdurch wird außerdem sichergestellt, daß die verbleibende Haut wirklich in voller Länge geschlitzt ist. Es ergibt sich ferner bereits beim Schälvorgang eine glatte und saubere Anschnittfläche, die der weiteren maschinellen Verarbeitung der Wurst entgegenkommt.

In den Unteransprüchen sind weitere vorteilhafte Ausgestaltungen der Erfindung angegeben, die sich auf die Betriebssicherheit, den Bauaufwand, die Wirtschaftlichkeit und die Unfallsicherheit der Schälmaschine günstig auswirken.

Die Erfindung ist in den Zeichnungen beispielsweise und schematisch dargestellt. Im einzelnen zeigen:

Fig. 1:     Die Schälmaschine in Ausgangsstellung und in Stirnansicht,

Fig. 2:     eine teilweise geschnittene Seitenansicht der Schälmaschine entsprechend Pfeil II von Fig. 1,

Fig. 3 - 6: die Schälmaschine in Stirnansicht gemäß Fig. 1 und Darstellung in verschiedenen Bewegungsabschnitten und

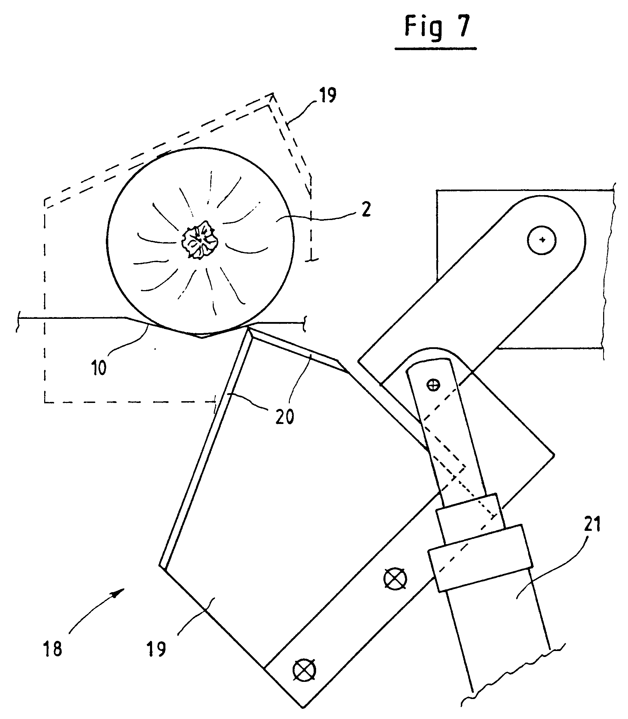

Fig. 7:     eine Stirnansicht der Schälmaschine mit einer Kappvorrichtung entspr. Pfeil VII von Fig. 2.

Die in den Zeichnungen dargestellte Schälmaschine (1) dient zum Ablösen der Haut (3) von block- oder stangenförmigen Lebensmitteln (2) und wird nachfolgend anhand des konkreten Beispiels einer Wurstschälmaschine näher beschrieben.

Die Schälmaschine (1) besteht im wesentlichen aus einer Trennvorrichtung (14) zum Schlitzen der Haut (3), einer Haltevorrichtung (4) mit einem Antrieb (8) und einer Saugvorrichtung (5), mittels der die Haut (3) beidseits der Trennlinie ergriffen und in einer vorzugsweise quergerichteten Ziehbewegung abgelöst wird. Zur Schälmaschine (1) gehören noch eine Auflage (10), auf der die Wurst (2) während des Schälvorganges ruht, sowie eine Kappvorrichtung (18) zum Entfernen der Wurstenden.

Die verschiedenen Maschinenteile sind in einem nicht näher dargestellten Maschinengestell angeordnet und befestigt, das von einem Gehäuse (24) umgeben ist. Auf der Eingangsseite ist eine Zuführvorrichtung (23) für automatischen Betrieb vorgesehen. Es kann aber auch eine manuelle Eingabe erfolgen. Ausgangsseitig ist eine schräge Ablaufplatte (25) angeordnet, über die die nackte Wurst (2) zur Weiterverarbeitung auf ein Transportmittel oder in einen Behälter rollt. Der Maschinenbereich wird eingangsseitig noch durch eine Abschirmung (22) geschützt, die beispielsweise als Schiebe- oder Schwenkklappe mit Sicherheitsschalter ausgebildet ist.

Die Wurst (2) wird von Hand oder mittels der Zuführvorrichtung (23), beispielsweise in Form eines Greifers oder Schiebers, in die Schälmaschine (1) gebracht und von der Seite her auf die Auflage (10) gelegt. Alternativ kann statt der Seitenzuführung auch eine axiale Zuführung in geeigneter Weise erfolgen. Die Auflage (10) zentriert die Wurst (2) und ist hierzu als Prisma ausgebildet. In der Auflage (10) ist eine Ansaugvorrichtung (12) angeordnet, deren Ansaugöffnungen im Auflagebereich der Wurst (2) angeordnet sind und bei Unterdruck die Haut (3) festhalten. Die Auflage (10) kann in der Länge in mehrere Abschnitte geteilt bzw. mehrstückig ausgebildet sein.

Senkrecht über der Auflage (10) ist die Trennvorrichtung (14) angeordnet, die vorzugsweise als Längsschneider ausgebildet ist und die Haut (3) der Wurst (2) zu Beginn des Schälvorgangs der Länge nach mit einem Schnitt aufschlitzt. Die Trennvorrichtung (14) besitzt ein in einer Führung (16) längsverfahrbares Trennmesser (15), das mit einem reversierenden Antrieb (17) versehen ist. Die Trennvorrichtung (14) kann damit gegebenenfalls im Vor- und Rücklauf arbeiten. Der Antrieb (17) ist vorzugsweise als Schleppantrieb mit einem Zugseil ausgebildet, an dem das Trennmesser (15) befestigt ist.

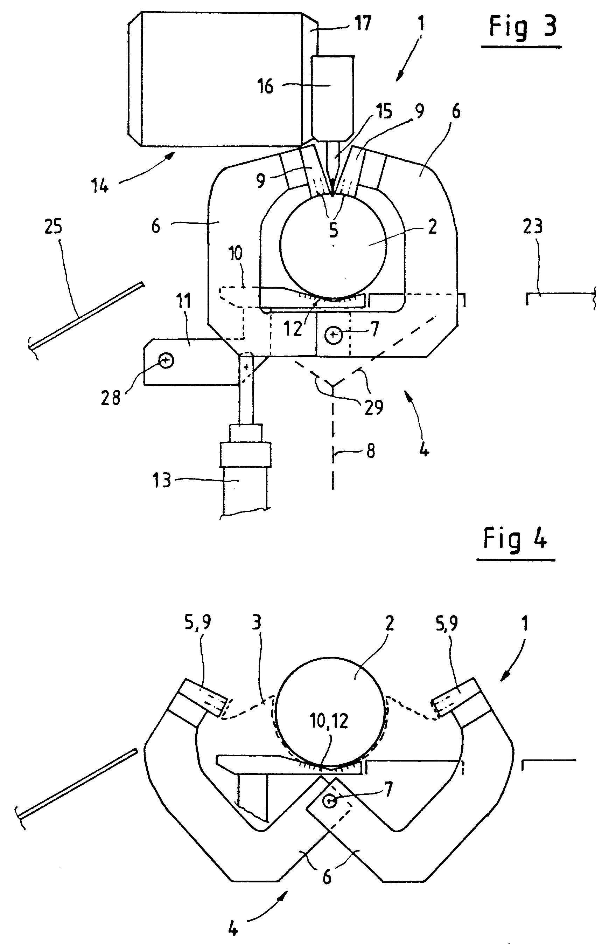

Die Haltevorrichtung (4) dient zum Fassen und Ablösen der Haut (3) nach dem anfänglichen Trennschnitt. Sie besteht hierzu aus mehreren Greifarmen (6), die in einem Gelenk (7) mittig unter der Auflage (10) drehbar gelagert sind. Die Drehachse verläuft im wesentlichen parallel zur Längsachse der Wurst (2). Die Greifarme (6) tragen an den Enden jeweils eine Saugleiste (9), die an der Berührungsseite mit der Haut (3) eine der Wurstwölbung angepaßte Kontur oder ein anschmiegfähiges Dichtelement trägt. Die Saugleisten (9) sind über geeignete flexible Leitungen (27) mit einer zentralen Saugquelle (26) verbunden, an der auch die Ansaugvorrichtung (12) der Auflage (10) angeschlossen ist. Die Greifarme (6) haben eine gebogene Form und können hierdurch die auf der Auflage (10) ruhende Wurst (2) umgreifen (vgl. Fig. 3).

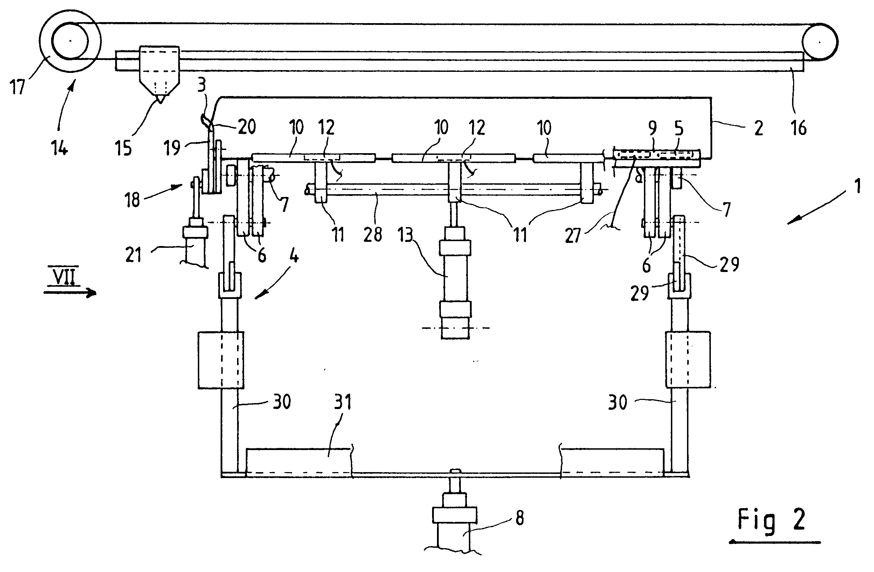

Die Greifarme (6) sind beidseits der Wurst (2) angeordnet und in zwei oder mehr Paaren vorhanden. Die Einzelarme jeder Seite sind durch die Saugleiste (9) miteinander verbunden. Für die Bewegung der Greifarme (6) ist ein zentraler Antrieb (8) vorgesehen, der mittig und mit Abstand unter dem Gelenk (7) angeordnet ist. Er besteht in der gezeigten Ausführungsform aus einem Zylinder, der eine längslaufende Verteilschiene (31) hebt und senkt (vgl. Fig. 2). In der gezeigten Ausführungsform mit vier Greifarmen (6) ist an den beiden Enden der Verteilschiene (31) jeweils ein aufragender Stempel (30) befestigt, der in einer geeigneten Buchse vertikal exakt geführt ist. Von diesen ebenfalls mittig unter dem Gelenk (7) angeordneten Stempeln (30) führt nach beiden Seiten jeweils ein Lenker (29) zu den benachbarten Greifarmen (6). Bei einer Aufwärtsbewegung des Antriebs (8) werden hierdurch die Greifarme (6) nach oben geschwenkt und nehmen zu Beginn des Schälvorganges die in Fig. 3 gezeigte Position ein.

In dieser Stellung befinden sich die Saugleisten (9) an der Wurstoberseite und beidseits in unmittelbarer Nähe des von der Trennvorrichtung (14) anschließend eingebrachten Längsschnittes. Die Saugleisten (9) drücken dabei auf die Wurst (2) und halten sie während des Trennvorganges fest.

Zusätzliche Spannmittel sind hierdurch entbehrlich, können gegebenenfalls aber zusätzlich vorgesehen sein.

Die gebogenen Greifarme (6) können die Wurst (2) mit Abstand umgreifen und sie somit nur über die Saugleisten (9) festhalten. Alternativ können sie aber an der Wurst (2) unter Vergrößerung der Spann- und Berührfläche mit anderen Armbereichen anliegen. Hierzu sind die Greifarme (6) in Form und Größe entsprechend angepaßt, z.B. auch mittels verstellbarer oder austauschbarer Anschläge, und ferner an die jeweiligen Wurstgrößen adaptiert.

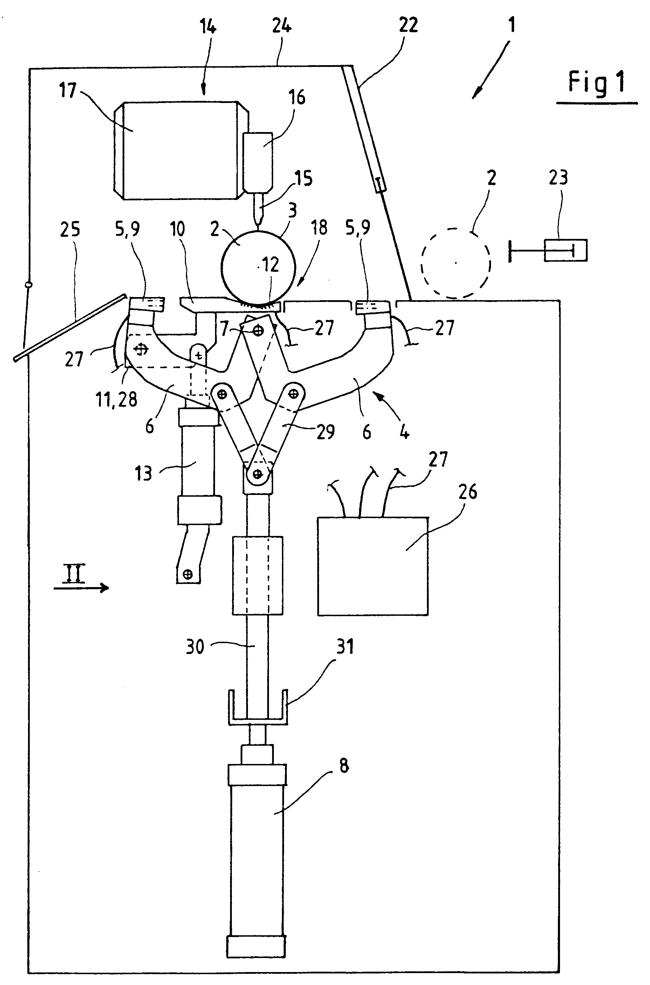

Die Saugleisten (9) weisen eine Reihe von Ansaugöffnungen auf, mit denen sie auf der Haut (3) anliegen. Die Ansaugöffnungen sind in mehrere Abteilungen gegliedert, die getrennt voneinander über eigene Leitungen mit der Saugquelle (26) verbunden sind. Hierdurch wird der Saugdruck über die Leistenlänge vergleichmäßigt. Die Saugöffnungen befinden sich in den Stirnseiten der Saugleisten (9) und weisen so in der abgeklappten Ausgangsstellung gemäß Fig. 1 zur Seite. Die massive Oberfläche der Saugleisten (9) dient in dieser Stellung als Tischverlängerung und Rollebene zum Einbringen der Wurst (2).

Nach erfolgtem Längsschnitt und bei festgehaltener Wurst (2) werden durch zwei Kappvorrichtungen (18) an den stirnseitigen Wurstenden die Zipfel abgeschnitten. Die Kappvorrichtungen (18) bestehen aus einem schwenkbar unterhalb der Auflage (10) gelagerten Kappmesser (19). Dieses weist eine Spitze und zwei hiervon ausgehende und winklig zueinander stehende Schneidflanken (20) auf. Die Lage der Spitze und die Kinematik des schwenkbaren Kappmessers (19) sind so ausgelegt, daß in der Aufwärtsbewegung die Spitze durch die Mittelachse der Wurst (2) schneidet. Die Wurstdurchmesser sind in der Regel genormt und unterscheiden sich nicht allzu weit, so daß bei entsprechender Messeranpassung die Messerspitze stets mehr oder weniger genau die Wurstmitte trifft. Durch die Spitze wird die Haut (3) an den gewölbten Wurstenden angestochen und das Wurstende durch die schrägen Schneidflanken (20) in einem ziehenden Schnitt sauber abgetrennt. Es ergeben sich glatte stirnseitige Anschnitte der Wurst (2). Der Kappschnitt kreuzt sich außerdem mit dem vorher eingebrachten Längsschnitt, so daß die Haut (3) mit Sicherheit der Länge nach geschlitzt ist.

Nach oder auch bereits vor dem Trenn- und dem Kappschnitt wird das Vakuum an den Saugleisten (9) eingeschaltet, so daß die Haut (3) beidseits des Längsschnittes erfaßt wird. Die Saugöffnungen in den Saugleisten (9) sind dabei in so großer Zahl und Flächenverteilung angeordnet, daß sich auf einer in Längsrichtung durchgehenden und relativ breiten Fläche eine konstante Saug- und Festhaltekraft ergibt.

Anschließend wird der Antrieb (8) wieder eingefahren, wodurch die Greifarme (6) synchron nach unten schwenken. Sie nehmen über die Saugleisten (9) die Haut (3) mit und lösen sie in einer quer zum Längsschnitt gerichteten Zugbewegung von der Wurst (2) ab. Durch die gegenüber der Wurst (2) achssymmetrische Gestaltung der Greifarme (6) und ihre synchrone Bewegung werden beim Ablösen der Haut (3) keine Seitenkräfte auf die Wurst (2) ausgeübt. An der Unterseite wird die Wurst (2) beziehungsweise die dort noch anliegende Haut (3) von der Ansaugvorrichtung in der Auflage (10) festgehalten. Das Vakuum ist hier bereits vor Einbringen des Längsschnittes und kurz nach dem Hochschwenken der Greifarme (6) in die in Fig. 3 dargestellte Stellung eingeschaltet worden.

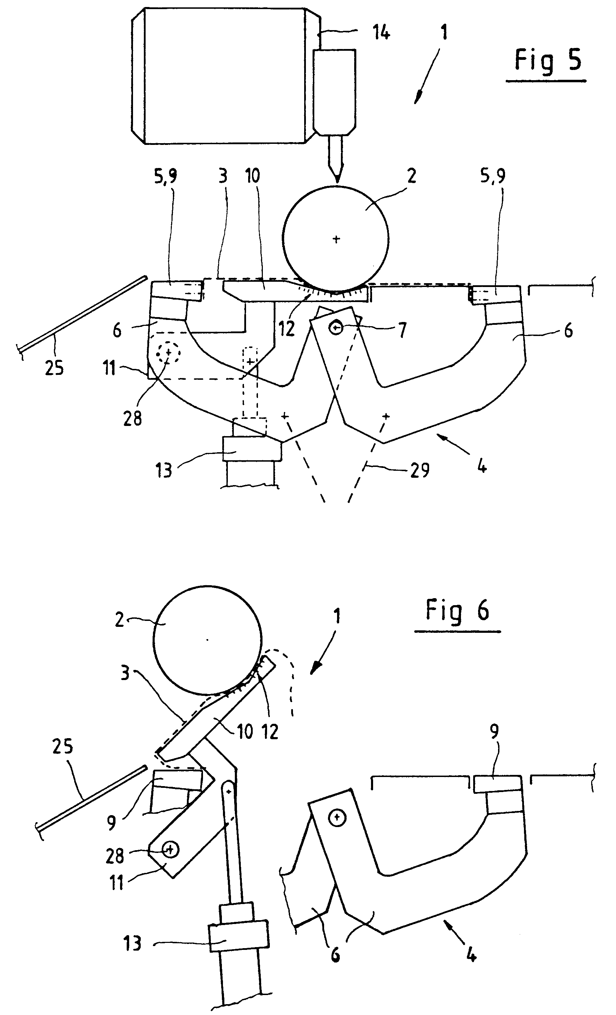

Fig. 3 - 5 zeigen in mehreren Bewegungsstionen das Ablösen der Haut (3) in der Schwenkbewegung der Greifarme (6). Am Ende nehmen die Greifarme (6) die in Fig. 5 gezeigte Stellung ein, die auch der Ausgangsstellung von Fig. 1 entspricht. Mit Einnehmen dieser Stellung wird die Haut (3) noch durch das Vakuum in den Saugleisten (9) festgehalten, das aber kurz darauf wieder abgeschaltet wird. Nun ist die Wurst (2) nur noch im Auflagebereich mit der Haut (3) verbunden.

Die Auflage (10) ist als schwenkbarer Auswerfer ausgebildet, der mittels eines Schwenkarms (11) um ein unten liegendes und seitlich nach außen versetztes Gelenk (28) drehen kann. Die Auflage (10) weist neben dem Prisma noch eine ebene Plattenfläche auf, an der der Schwenkarm (11) angreift.

Durch Betätigung eines geeigneten Antriebs (13), beispielsweise eines Zylinders, wird die Auflage (10) nach oben geschwenkt und nimmt die in Fig. 6 dargestellte Lage ein. Das Vakuum in der Ansaugvorrichtung (12) ist noch eingeschaltet, so daß die Haut (3) im Auflagebereich des Prismas festgehalten wird. Die Wurst (2) kann nun aber durch ihr Eigengewicht über die gerade Platte der Auflage (10) und über die Saugleiste (9) hinweg auf die Ablaufplatte (25) abrollen. Sie löst sich dabei von der festgehaltenen und auf der Auflage (10) verbleibenden Haut (3). Nach dem Abrollen der Wurst (2) schwenkt die Auflage (10) wieder in die Ausgangsstellung zurück. Das Abrollen der Wurst (2) kann gegebenenfalls durch geeignete Sensoren überwacht werden. In der Ausgangsstellung gemäß Fig. 1 wird das Vakuum der Ansaugvorrichtung (12) abgeschaltet.

Die Ansaugvorrichtung (12) ist durch ein geeignetes Mehrwegeventil umsteuerbar. Nach dem Abschalten des Vakuums wird auf Blasdruck umgeschaltet und zumindest ein kurzer Druckstoß auf die Haut (3) ausgeübt. Sie wird hierdurch sicher von der Auflage (10) abgelöst und kann manuell oder automatisch durch einen Greifer oder dgl. entfernt werden. Das Umsteuern und der Druckstoß können auch in der Schrägstellung gemäß Fig. 6 erfolgen, so daß die leere Haut (3) abgeblasen und von einer geeigneten Auffangvorrichtung übernommen wird.

Nach Auswurf der Haut (3) steht die Schälmaschine (1) wieder in der leeren Ausganggstellung gemäß Fig. 1 und ist für die Zuführung einer neuen Wurst (2) bereit.

**BEZUGZEICHENLISTE**

| | |
|---|---|
| 1 | Schälmaschine |
| 2 | Lebensmittel, Wurst |
| 3 | Haut |
| 4 | Haltevorrichtung |
| 5 | Saugvorrichtung |
| 6 | Greifarm |
| 7 | Gelenk |
| 8 | Antrieb, Greifarme |
| 9 | Saugleiste |
| 10 | Auflage, Prisma |
| 11 | Schwenkarm |
| 12 | Ansaugvorrichtung |
| 13 | Antrieb, Auswerfer |
| 14 | Trennvorrichtung, Längsschneider |
| 15 | Trennmesser |
| 16 | Führung |
| 17 | Antrieb, Trennmesser |
| 18 | Kappvorrichtung |
| 19 | Kappmesser |
| 20 | Schneidflanke |
| 21 | Antrieb, Kappmesser |
| 22 | Abschirmung |
| 23 | Zuführvorrichtung |
| 24 | Gehäuse |
| 25 | Ablaufplatte |
| 26 | Saugquelle |
| 27 | Leitung |
| 28 | Gelenk |
| 29 | Lenker |
| 30 | Stempel |
| 31 | Verteilschiene |

**Patentansprüche**

1. Verfahren zum maschinellen Ablösen der Haut von block- oder stangenförmigen Lebensmitteln (2), insbesondere Würsten, mittels einer Schälmaschine (1), wobei die Haut (3) aufgetrennt, im Bereich der Trennlinie festgehalten und durch eine mechanische Zugbewegung vom Lebensmittel (2) abgelöst wird.

2. Verfahren nach Anspruch 1, dadurch **gekennzeichnet**, daß die Haut (3) in Längsrichtung des Lebensmittels (2) aufgetrennt wird und die Zugbewegung quer oder schräg zur Trennlinie gerichtet ist.

3. Verfahren nach Anspruch 1, dadurch **gekennzeichnet**, daß die Haut (3) beidseits der Trennlinie festgehalten und vom ruhenden Lebensmittel (2) in einer Schwenkbewegung abgezogen wird.

4. Verfahren nach Anspruch 1, 2 oder 3, dadurch **gekennzeichnet**, daß die Haut (3) mit Unterdruck festgehalten wird.

5. Verfahren nach Anspruch 1 oder einem der folgenden, dadurch **gekennzeichnet**, daß das Lebensmittel (2) und die Haut (3) vor und während des Auftrennvorgangs festgehalten werden.

6. Vorrichtung zum maschinellen Ablösen der Haut von block- oder stangenförmigen Lebensmitteln (2), insbesondere Würsten, wobei die Schälmaschine (1) eine Trennvorrichtung (14) zum Auftrennen der Haut (3), eine Haltevorrichtung (4) zum Festhalten der Haut (3) im Bereich der Trennlinie und einen Antrieb (8) aufweist, mit dem eine ziehende Relativbewegung zwischen der Haltevorrichtung (4) mit der festgehaltenen Haut (3) und dem Lebensmittel (2) erzeugbar ist.

7. Vorrichtung nach Anspruch 6, dadurch **gekennzeichnet**, daß die Haltevorrichtung (4) eine Saugvorrichtung (5) aufweist.

8. Vorrichtung nach Anspruch 6 oder 7, dadurch **gekennzeichnet**, daß die Trennvorrichtung (14) als Längsschneider mit einem beweglichen Trennmesser (15) ausgebildet ist.

9. Vorrichtung nach Anspruch 6, 7 oder 8, dadurch **gekennzeichnet**, daß mit der Haltevorrichtung (4) quer oder schräg zur Trennlinie gerichtete Relativbewegung erzeugbar ist.

10. Vorrichtung nach Anspruch 6 oder einem der folgenden, dadurch **gekennzeichnet**, daß die Haltevorrichtung (4) zwei angetriebene (8) Greifarme (6) mit steuerbaren Saugleisten (9) aufweist, die beim Auftrennen der Haut (3) beidseits und längs der Trennlinie positioniert sind, die Haut (3) festhalten und dann vom Lebensmittel (2) abziehen.

11. Vorrichtung nach Anspruch 10, dadurch **gekennzeichnet**, daß die Greifarme (6) achssymmetrisch zum Lebensmittel (2) angeordnet sind, eine gebogene Form aufweisen und das Lebensmittel (2) beim Auftrennen der Haut (3) umgreifen.

12. Vorrichtung nach Anspruch 10 oder 11, dadurch **gekennzeichnet**, daß die Greifarme (6) in einem Gelenk (7) drehbar gelagert sind, das mittig unter einer zentrierenden Auflage (10) für das Lebensmittel (2) angeordnet ist.

13. Vorrichtung nach Anspruch 10 oder einem der folgenden, dadurch **gekennzeichnet**, daß die beiden Greifarme (6) einen gemeinsamen zentral angeordneten Antrieb (8) für eine synchrone Bewegung aufweisen.

14. Vorrichtung nach Anspruch 6 oder einem der folgenden, dadurch **gekennzeichnet**, daß die Auflage (10) für das Lebensmittel (2) eine Ansaugvorrichtung (12) aufweist.

15. Vorrichtung nach Anspruch 14, dadurch **gekennzeichnet**, daß die Ansaugvorrichtung (12) auf Blasdruck umsteuerbar ist.

16. Vorrichtung nach Anspruch 14 oder 15, dadurch **gekennzeichnet**, daß die Auflage (10) als beweglicher Auswerfer ausgebildet ist.

17. Vorrichtung nach Anspruch 6 oder einem der folgenden, dadurch **gekennzeichnet**, daß an einer oder beiden Stirnseiten eine Kappvorrichtung (18) zum Entfernen der Enden des Lebensmittels (2) angeordnet ist.

18. Vorrichtung nach Anspruch 17, dadurch **gekennzeichnet**, daß die Kappvorrichtung (18) ein bewegliches angetriebenes Kappmesser (19) mit einer Spitze und zwei hiervon ausgehenden Schneidflanken (20) aufweist.

19. Vorrichtung nach Anspruch 6 oder einem der folgenden, dadurch **gekennzeichnet**, daß der Arbeitsbereich um die Auflage (10), die Haltevorrichtung (4), die Trennvorrichtung (14) und die Kappvorrichtung (18) mit einer Abschirmung (22) geschützt ist.

20. Vorrichtung nach Anspruch 6 oder einem der folgenden, dadurch **gekennzeichnet**, daß seitlich neben der Auflage (10) eine Zuführvorrichtung (23) für das Lebensmittel (2) angeordnet ist.

Fig 1

Fig 2

EP 0 509 477 A1

Fig 3

Fig 4

Fig 5

Fig 6

## Fig 7

Europäisches
Patentamt

**EUROPÄISCHER RECHERCHENBERICHT**

Nummer der Anmeldung

EP    92 10 6520

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X<br>A | US-A-2 434 316 (GOLDEN)<br>* das ganze Dokument *<br>--- | 1,2,6,17<br>9-13 | A22C11/00 |
| A | US-A-2 699 570 (CHAMBERS)<br><br>* Spalte 2, Zeile 31 - Spalte 3, Zeile 65 *<br>* Spalte 4, Zeile 50 - Spalte 5, Zeile 51 *<br>--- | 1-3,5,6,<br>9,10 | |
| D,A | DE-C-2 759 892 (LINKER MACHINES)<br>* Anspruch 1 *<br>--- | 1,4,7 | |
| A | US-A-3 487 498 (GRANDON)<br>* Spalte 4, Zeile 10 - Spalte 6, Zeile 16 *<br>--- | 4,7 | |
| A | US-A-2 644 979 (BALL)<br>--- | | |
| A | DE-A-2 643 496 (RUECKERT)<br>--- | | |
| A | GB-A-745 966 (KARTRIDG-PAK MACHINE)<br>--- | | |
| A | US-A-3 390 422 (DOYLE)<br><br>----- | | |

RECHERCHIERTE SACHGEBIETE (Int. Cl.5 )

A22C

Der vorliegende Recherchenbericht wurde für alle Patentansprüche erstellt

| Recherchenort | Abschlußdatum der Recherche | Prüfer |
|---|---|---|
| DEN HAAG | 07 JULI 1992 | DE LAMEILLIEURE D. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
..........................................................................................
& : Mitglied der gleichen Patentfamilie, übereinstimmendes
    Dokument

EPO FORM 1503 03.82 (P0403)